(19) Europäisches Patentamt

European Patent Office

Office européen des brevets

(11) **EP 2 822 912 B1**

(12) **FASCICULE DE BREVET EUROPEEN**

(45) Date de publication et mention de la délivrance du brevet:
**15.08.2018 Bulletin 2018/33**

(51) Int Cl.:
***C04B 28/02*** (2006.01)

(21) Numéro de dépôt: **12708137.0**

(22) Date de dépôt: **09.03.2012**

(86) Numéro de dépôt international:
**PCT/EP2012/054168**

(87) Numéro de publication internationale:
**WO 2013/131584 (12.09.2013 Gazette 2013/37)**

(54) **UTILISATION D'AU MOINS UN POLYMERE SUPERABSORBANT -PSA- (B), DANS UNE COMPOSITION SECHE A BASE DE LIANT MINERAL ET DESTINEE A LA PREPARATION D'UNE FORMULATION HUMIDE DURCISSABLE POUR LE BATIMENT**

VERWENDUNG VON MINDESTENS EINEM SUPERABSORBIERENDEN POLYMER (PSA) (B) IN EINER TROCKENEN ZUSAMMENSETZUNG AUF DER BASIS EINES MINERALISCHEN BINDEMITTELS ZUR HERSTELLUNG EINER HÄRTBAREN FEUCHTEN FORMULIERUNG FÜR DIE BAUINDUSTRIE

USE OF AT LEAST ONE SUPERABSORBENT POLYMER (PSA) (B), IN A DRY COMPOSITION BASED ON A MINERAL BINDER AND USED FOR PREPARING A HARDENABLE MOIST FORMULATION FOR THE BUILDING INDUSTRY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**14.01.2015 Bulletin 2015/03**

(73) Titulaire: **PAREXGROUP SA**
**92440 Issy Les Moulineaux (FR)**

(72) Inventeurs:
• **DANTIN, Véronique**
**38291 Saint-Quentin Fallavier (FR)**

• **GONCALO, Paulo**
**38291 Saint-Quentin Fallavier (FR)**
• **PERSOZ, Stéphanie**
**38291 Saint-Quentin Fallavier (FR)**

(74) Mandataire: **Cabinet Plasseraud**
**235 Cours Lafayette**
**69006 Lyon (FR)**

(56) Documents cités:
**WO-A1-2004/101952     FR-A1- 2 955 103**
**FR-A1- 2 955 104     US-A1- 2010 190 888**

EP 2 822 912 B1

Printed by Jouve, 75001 PARIS (FR)

**Description**

**Domaine technique**

Le domaine technique de l'invention est celui des compositions de poudres destinées à la préparation de formulations humides pour le bâtiment par exemple d'enduits, de mortiers, de bétons ou de colles pour le bâtiment.
Ces formulations humides peuvent être obtenues :

- directement par gâchage des compositions de poudres sur les chantiers (*e.g.* enduits, mortiers, bétons ou colles pour le bâtiment),
- gâchage des compositions de poudre dans des sites industriels pour la réalisation de pièces préfabriquées telles que par exemple des plaques, des blocs bétons ou des monomurs.

Plus précisément, l'invention concerne l'utilisation d'un Polymère SuperAbsorbant - PSA- dans des compositions sèches à base de liants minéraux, ces compositions étant aptes à produire après gâchage avec de l'eau à des taux élevés de gâchage, par exemple supérieurs à 50 %, des formulations humides permettant la réalisation d'articles durcis allégés, tels que des revêtements ou enduits extérieurs ou intérieurs (e.g. système d'isolation thermique par l'extérieur -ITE-/ décoration/ protection/ imperméabilisation), des colles, des objets massiques....

**Arrière plan technologique**

Dans ce domaine technique, un besoin constant existe pour un système "mousse" intégrant de l'air dans les enduits, les mortiers et les bétons humides ou durcis, de façon à les alléger et à leur procurer des propriétés intéressantes notamment en termes d'isolation acoustique et/ou thermique et de résistance thermique ou résistance anti feu. Ces mousses d'enduits, de mortiers ou de bétons humides, de densité faible, devraient également posséder une bonne ouvrabilité ou maniabilité. Les propriétés d'isolation acoustique et/ou thermique de ces mousses d'enduits, de mortiers ou de bétons, seraient particulièrement appréciées pour des revêtements de sols ou ragréages, pour des enduits extérieurs pour la protection des façades, pour des mortiers coupe-feu, entre autres.
On connaît déjà un certain nombre d'adjuvants pour compositions d'enduits de mortiers ou de béton, ayant pour fonction de générer des gaz in situ et donc de former une mousse après gâchage et une porosité après durcissement. C'est le cas notamment des poudres d'aluminium aptes à produire de l'hydrogène en milieu aqueux ou alcalin, de même que le peroxyde d'hydrogène qui dégage rapidement de l'oxygène lorsqu'il est en contact avec des catalyseurs tels que l'argent ou le permanganate de potassium. D'autres familles d'adjuvants générateurs in situ de gaz en milieu cimentaire tels que l'oxygène, l'azote, l'hydrogène, le dioxyde de carbone, le monoxyde de carbone, l'ammoniac, le méthane, sont décrits dans le US7288147B de la société Construction Research & Technology.
Ainsi les blocs allégés de type YTONG® et les murs allégés commercialisés par la société XELLA® sont obtenus par autoclavage de blocs de silicate de calcium qui ont été préalablement allégés par l'introduction de poudre d'aluminium, génératrice d'hydrogène. Ces éléments préfabriqués présentent des propriétés d'isolation thermique et de résistance mécanique permettant leur utilisation comme éléments de structure (cas des blocs Thermopierre présentant une valeur de lambda proche de 0,12 W/m.Kt et une résistance mécanique de 3-5 MPa environ) ou bien comme éléments de parement non porteurs, apportant une isolation thermique complémentaire (cas des parements Multipor® présentant une valeur de lambda proche de 0,048 W/m.K et une résistance mécanique de 0,5 MPa). L'obtention de ces éléments nécessite la manipulation de poudre d'aluminium qui nécessite des précautions particulières compte tenu de son caractère explosif. De plus, une étape coûteuse d'autoclavage est nécessaire pour conférer à ces éléments la tenue mécanique nécessaire. Cette technique est donc inexploitable sur chantiers. De plus, pour ce qui concerne la production de pièces préfabriquées, il existe une demande pour des technologies alternatives de production d'éléments préfabriqués présentant les mêmes types de performances mécaniques et d'isolation thermique, qui évitent l'utilisation de poudre d'aluminium (suppression des problèmes potentiels d'explosion) et qui évitent l'étape coûteuse d'autoclavage: coût énergétique, faible productivité et investissements spécifiques.
On connaît également des adjuvants pour enduits mortiers béton entraîneur d'air, qui ont vocation à piéger l'air environnant, lors du mélange avec l'eau (gâchage) des compositions sèches d'enduits, de mortiers ou de béton. Ces entraîneurs d'air sont par exemple des tensioactifs, des acides gras, des sels alcalins d'acides gras tels que le laurylsulfate de sodium. De tels adjuvants entraîneurs d'air connus sont perfectibles.
En effet, toute la difficulté de cette voie de production de mousses par entraînement d'air, réside dans la stabilisation de l'air emprisonné au sein de la matrice humide d'enduit de mortier ou de béton.
Cette stabilisation est d'autant plus délicate qu'elle ne doit pas être obtenue au détriment des propriétés d'usage (e.g. de la maniabilité) des formes humides de mousses d'enduits, de mortiers et de béton, ni au détriment des propriétés (notamment mécaniques) attendues pour les formes durcies de ces mousses.

En outre, la stabilité de la mousse doit également être présente à chaque étape des procédés de préparation et d'application. Cela doit se traduire par une densité ne variant pas au cours de chaque étape, que ce soit en cuve de malaxage, après passage dans les tuyaux (densité sortie de lance dsl) ou lors de la projection, lorsque l'application s'opère ainsi. En revanche, cette densité peut être différente entre chaque étape. La reproductibilité et la fiabilité du procédé d'obtention de ces mousses, si elles sont délicates en milieu industriel, posent un vrai problème de robustesse lorsque l'on envisage une mise en oeuvre directement sur un chantier par des opérateurs non qualifiés. Dans la pratique, leur utilisation sur chantier est très limitée car elle nécessite une main d'oeuvre hautement qualifiée.

Pour perfectionner cette voie de production de mousses par entraînement d'air, FR 2955103A propose une composition sèche pour la préparation de mousses d'enduits, de mortiers et de bétons pour le bâtiment, qui deviennent poreuses une fois durcies, de manière à être allégées, isolantes thermiquement et/ou acoustiquement, aussi bien sous forme pâteuse que sous forme durcie, et qui sont obtenues par entraînement d'air lors du gâchage. Cette composition comporte un adjuvant moussant comprenant :

A. un éther d'amidon modifié de viscosité brookfield comprise entre 500 et 25.000 mPa.s. ;
B. un stabilisant comprenant au moins un polyacrylamide linéaire ;
C. un polymère filmogène.

FR2955104A concerne un matériau thermo-isolant à structure cellulaire comprenant en poids par rapport au poids total du matériau : - 4 à 96% d'un liant hydraulique caractérisé avant mise en contact avec de l'eau ,en ce qu'il comprend au moins une phase choisie parmi C3A, CA, C12A7, C11A7CaF2, C4A3\$ (yée lemite), C2A$_{(1-x)}$F$_x$ (avec C → CaO ; A → Al$_2$O$_3$; F → Fe$_2$O$_3$ et x appartenant à ]0, 1]), des phases amorphes hydrauliques présentant un ratio molaire C/A compris entre 0,3 et 15 et tel que les teneurs cumulées en Al$_2$0$_3$ de ces phases soient comprises entre 3 et 70 % en poids du total du liant hydraulique, - 4 à 96% d'au moins une charge; ledit matériau présentant un coefficient de conductivité thermique à 20°C, égal ou inférieur à 0,20 W/m.°C. Ce matériau thermo-isolant est obtenu à partir d'une mousse.

Ces mousses aqueuses selon les FR2955103A & FR2955104A sont perfectibles, car d'une part, leur stabilité n'est pas à toute épreuve, et, d'autre part, leur mélange à un slurry de ciment est une opération d'incorporation qui doit être effectuée délicatement pour ne pas casser ces mousses. Une telle opération est difficile à mettre en oeuvre dans des conditions de chantier et nécessite l'utilisation de machines spécifiques.

Il est également important que le gain en termes d'allègement ne se fasse pas au détriment des autres propriétés requises pour les réalisations obtenues à partir des formulations humides enduits, mortiers, bétons, issues des compositions cimentaires sèches. Sont ici visées, les propriétés de la formulation humide: maniabilité, ouvrabilité, pompabilité, rhéologie, facilité de mélange et d'application ainsi que de nettoyage des outils et les propriétés des produits durcis obtenus à partir de cette formulation humide : protection/imperméabilisation, isolation thermique et acoustique, dureté, résistance à la fissuration, résistance à la flexion, résistance à la compression, et durabilité.

La demande de brevet US2003/144386 décrit des mélanges de matériaux de construction à prise hydraulique, comprenant moins de 2% en poids de particules de taille supérieure à 200$\mu$m d'un polymère apte à former un hydrogel. En particulier, US 2003/144386 divulgue des mortiers standard préparés conformément à la norme EN 196 (1350g de sable normalisé - 450g de ciment - 225g eau de gâchage), dans lesquels sont incorporés 0,5 % en poids des Polymères SuperAbsorbants (PSA) Hysorb C3746-1 & C Hysorb 3746-5 de BASF ayant moins de 2 % en poids de particules de taille supérieure à 200$\mu$m ainsi qu'un PSA comparatif Hysorb C 7015 de BASF ayant nettement plus de 2% en poids de particules de taille supérieure à 200$\mu$m. Les PSA Hysorb C3746-1 & C Hysorb 3746-5 permettent d'accroitre les résistances à la compression et à la flexion des produits finis durcis obtenus à partir de ces mortiers, par rapport au PSA comparatif Hysorb C 7015.

La demande de brevet US2010/190888 décrit un mélange sec de matériaux de construction à prise hydraulique, de préférence une colle à carrelage en conformité avec la norme EN 12004, caractérisé en ce qu'il comprend :

a) de 10 à 95 pour cent en poids d'un ciment contenant, liant hydraulique,
b) de 5 à 75 pour cent en poids de charges minérales et / ou des charges organiques,
c) de 0,5 à 10 pour cent en poids d'une poudre polymère redispersible,
d) de 0,1 à 1.5 pour cent en poids d'un agent de rétention d'eau qui est basé sur des structures polysaccharidiques et est de préférence soluble dans l'eau et est de préférence choisi parmi le groupe constitué d'éthers de cellulose, les éthers d'amidon et de polysaccharides produite ou microbienne naturelle,
e) de 0,3 à 4,0 pour cent en poids d'un accélérateur de prise de préférence hydrosolubles choisis parmi le groupe constitué de formiate de calcium, chlorure de calcium, nitrate de calcium et,
f$_a$) ou f$_b$) de 0,02 à 2.0 pour cent en poids d'un copolymère acrylique de type anionique ou cationique pulvérulent, qui est de préférence gonflable au moyen de solutions d'eau ou de sel et est particulièrement de préférence insoluble dans l'eau et peut avantageusement être préparés par polymérisation radicalaire de composés vinyliques éthylé-

niquement insaturés; $f_a$) ou $f_b$) ayant une distribution de taille des particules déterminée conformément à la norme 420 EDANA.2-02, telle que plus de 98 % en poids passent un tamis ayant un maillage de 200 μm. Les compositions divulguées sont :

| Colle à carrelage | Colle à carrelage | Système d'isolation thermique composite |
|---|---|---|
| a) CEM II A 42,5 R | a) Ciment Portland CEM I | a) ciment Portland (Par exemple CEM I 42,5 R) |
| b) charge siliceuse légère | b) sable de silice et granulats calcaires | b) Sable de silice ou pierre calcaire broyée |
| c) Copolymère d'éthylène vinyle acétate | c) copolymère Acétate de vinyle-éthylène | c) copolymère Acétate de vinyle-éthylène |
| d) Hydroxypropylméthylcellulose | d)Hydroxypropylméthylcellulose de cellulose et éther d'amidon | d)Hydroxypropylméthylcellulose de cellulose |
| e) Formiate de calcium | e) Accélérateur formiate de calcium | e) Formiate de calcium |
| $f_a$)copolymère 1 (anionique): 0,30 ou 0,45 % | fa) copolymère 1 (anionique) ou fb) copolymère 2 (cationique) : 0,30 ou 0,45 % | $f_a$) copolymère 1 (anionique) ou $f_b$) copolymère 2 (cationique) : 0,30 ou 0,4 % |
| Fibres de cellulose | Fibres de cellulose | |
| Na de bentonite | | |
| FeSO4-7H20 | | |
| Taux de gâchage : 76, 56, 58 & 61 % | Taux de gâchage : 36 % | Taux de gâchage : 25 % |

Les compositions selon cette demande US2010/190888 visent à améliorer le rendement à savoir le rapport entre le *volume de la formulation humide / masse du mortier sec,* pour des raisons économiques (*e.g.* diminuer les stocks de mortier sec). L'accélération de la vitesse de prise et la stabilité du mortier sec. L'utilisation de formiate de calcium ou autres sels de calcium participe à ce résultat selon la demande US2010/190888.

La demande de brevet WO 2004/101952 A1 divulgue un procédé de préparation d'une formulation humide pour le bâtiment comprenant un liant minéral, au moins un polymère superabsorbant et un liquide, caractérisé en ce qu'il consiste essentiellement à mélanger le liquide à tout ou partie des composants solides de la composition.

Il apparait donc que l'art antérieur n'enseigne pas de moyen pour améliorer les caractéristiques d'isolation thermique des produits durcis pour le bâtiment obtenus à partir de formulations humides issues du gâchage de compositions sèches à base de liant minéral et d'un Polymère SuperAbsorbant -PSA-.

**Problème technique - Objectifs de l'invention**

Dans ce contexte, le problème technique à la base de la présente invention est de satisfaire à au moins l'un des objectifs énoncés ci-après :

(i) Fournir des moyens pour améliorer les caractéristiques d'isolation thermique des produits durcis pour le bâtiment obtenus à partir de formulations humides issues du gâchage de compositions sèches (e.g.cimentaires) à base de liant minéral.

(ii) Fournir des moyens pour diminuer la conductivité thermique réduite λ (W.m$^{-1}$.K$^{-1}$) des produits durcis pour le bâtiment, obtenus à partir de formulations humides issues du gâchage de compositions sèches (e.g.cimentaires) à base de liant minéral.

(iii) Fournir des moyens satisfaisant à l'objectif (i) ou (ii) ci-dessus, en allégeant significativement les produits durcis concernés, et ce avec des rendements *volume de formulation humide (pâte) /volume ou masse de composition sèche,* améliorés, notamment par rapport aux compositions classiques de référence telles que celles selon la demande US2010/190888.

(iv) Fournir des moyens satisfaisant à au moins l'un des objectifs (i) à (iii) ci-dessus, en allégeant significativement les produits durcis concernés et en diminuant l'empreinte environnementale de la composition : réduction des émissions de $CO_2$ lors du transport.

(v) Fournir des moyens satisfaisant à au moins l'un des objectifs (i) à (iv) ci-dessus, en allégeant significativement les produits durcis concernés, et en diminuant la pénibilité du travail de l'utilisateur en mettant à disposition des sacs plus légers par surface travaillée identique.

(vi) Fournir des moyens satisfaisant à au moins l'un des objectifs (i) à (v) ci-dessus et permettant la mise en oeuvre d'une composition sèche (*e.g.* cimentaire) conduisant, après gâchage, à des formulations humides (enduits-mortiers-bétons-colles) riches en liquide de gâchage (e.g. eau), et comportant au moins une fois et demi la quantité d'eau contenue dans un mortier classique sans superabsorbant.

(vii) Fournir des moyens satisfaisant à au moins l'un des objectifs (i) à (vi) ci-dessus, avec des formulations humides (pâtes-enduits-mortiers-bétons-colles) projetables aisément, simples à mettre en oeuvre, présentant une consistance et une viscosité de pâte permettant le pompage par une machine à projeter, une aptitude au pompage, une ouvrabilité suffisamment longue pour réaliser le gâchage et l'application notamment d'enduits, tout en restant économiques, et stables après gâchage.

(viii) Fournir des moyens satisfaisant à au moins l'un des objectifs (i) à (vii) ci-dessus, pour des produits durcis qui sont des revêtements de protection /imperméabilisation, voire éventuellement de revêtement de décoration.

(ix) Fournir des moyens satisfaisant à au moins l'un des objectifs (i) à (viii) ci-dessus, avec des formulations humides suffisamment stables, pour pouvoir être appliquées ou mises en forme et qui aient des propriétés mécaniques durables sous forme durcies.

(x) Fournir des moyens satisfaisant à au moins l'un des objectifs (i) à (ix) ci-dessus, avec des procédés de préparation de la composition cimentaire et de la formulation humide correspondante, qui soient faciles à mettre en oeuvre et qui soient économiques.

(xi) Fournir des moyens satisfaisant à au moins l'un des objectifs (i) à (x) ci-dessus, pour des produits durcis allégés (enduits-mortiers- compositions de ciments-colles) à conductivité thermique réduite, simples à obtenir, économiques et dotés de bonnes performances mécaniques à long terme (dureté, résistance en flexion/compression, durabilité, cohésion) et de bonnes performances de mise en oeuvre.

(xii) Fournir des moyens satisfaisant à au moins l'un des objectifs (i) à (xi) ci-dessus, pour des produits durcis allégés qui sont des pièces préfabriquées permettant d'éviter une étape coûteuse d'autoclavage.

(xiii) Fournir des moyens satisfaisant à au moins l'un des objectifs (i) à (xii) ci-dessus, pour des procédés de préparation de la composition cimentaire et de la formulation humide correspondante, qui soient faciles à mettre en oeuvre et qui soient économiques.

(xiv) Fournir des moyens satisfaisant à au moins l'un des objectifs (i) à (xiii) ci-dessus, pour des produits durcis allégés (préfabriqués ou non) pour le bâtiment obtenus au moyen de la formulation humide évoquée dans les objectifs ci-dessus mentionnés (pâtes-coulis- enduits-mortiers- bétons, compositions de mortier-colles, blocs bétons, panneaux sandwich), simples à obtenir (sans poudres d'aluminium dangereuses), économiques (sans autoclavage), dotés de bonnes performances mécaniques à long terme (dureté, résistance en flexion/compression, durabilité, cohésion) et ayant de bonnes performances de mise en oeuvre.

## Brève description de l'invention

Le problème ci-dessus mentionné est résolu par l'invention qui propose à cette fin, l'utilisation d'un mélange comprenant un liant minéral (a) et au moins un Polymère SuperAbsorbant -PSA- (b),
pour améliorer les caractéristiques thermiques (par exemple l'isolation) d'un produit durci destiné au bâtiment, par abaissement de sa conductivité thermique $\lambda$ ($W.m^{-1}.K^{-1}$), ce produit durci étant obtenu à partir d'une composition sèche ou d'une formulation humide comprenant ce mélange.

### *Avantages*

L'utilisation selon l'invention permet d'obtenir des produits durcis pour le bâtiment présentant un excellent compromis abaissement de la conductivité thermique /propriétés mécaniques.

Suivant une caractéristique préférée de l'invention, la conductivité thermique $\lambda$ ($W.m^{-1}.K^{-1}$) du produit durci, est inférieure à 1,0, préférentiellement inferieure ou égale à 0,95 et préférentiellement inférieure ou égale à 0,90.

S'agissant de $\lambda$, le gain en baisse de conductivité thermique $\lambda$ ($W.m^{-1}.K^{-1}$) du produit durci, par rapport à un produit durci sans PSA (b), est, de manière remarquable supérieur ou égal à 10%, de préférence à 15% et préférentiellement à 20%.

Il doit être également relevé que l'utilisation selon l'invention implique des compositions sèches à base de liant minéral (a) et de PSA (b), qui donnent accès à des formulations humides aisément préparables, parfaitement maniables, de rhéologie et d'ouvrabilité adaptées et, in fine, à des revêtements ou des objets massiques durcis, ayant des propriétés mécaniques tout à fait satisfaisantes et stables dans le temps. Le cahier des charges est également satisfait au regard des spécifications de décoration, de protection et d'imperméabilisation. Par ailleurs, la composition suivant l'invention permet de conduire à des revêtements durcis présentant une bonne résistance au feu.

*Définitions*

Dans tout le présent exposé, tout singulier désigne indifféremment un singulier ou un pluriel.

Les définitions données ci-après à titre d'exemples, peuvent servir à l'interprétation du présent exposé :

- *"polymère"* désigne indifféremment "*homopolymère*" et *"copolymère" ;*
- *"mortier"* désigne un mélange sec ou humide ou durci d'un ou plusieurs liants organiques et/ou minéraux, de granulats de diamètre < 5mm (sables -agrégats), et éventuellement de fillers et/ou d'additifs et/ou d'adjuvants ;
- *"enduit"* désigne plus spécialement un mortier utilisé en revêtement superficiel d'une surface afin de la protéger, l'homogénéiser, la décorer, etc. ;
- *"colle"* désigne une composition sèche, humide ou durcie, servant à coller du carrelage sur un support ;
- *"pâte"* désigne une composition humide contenant de l'eau ;
- *"charge* " est une charge dont la densité apparente est supérieure à 0,75 ;
- *"charge légère"* est une charge dont la densité apparente est inférieure ou égale 0,75 ;
- *"liquide":* dispersion, émulsion ou solution à base aqueuse.

**Description détaillée de l'invention**

*L'UTILISATION D'UN PSA DANS UNE COMPOSITION SECHE POUR LE BATIMENT*

Les inventeurs ont eu le mérite de mettre en évidence que l'incorporation d'un mélange liant minéral (a) / PSA (b) dans une composition (*e.g.* cimentaire) sèche, permet, après hydratation (*e.g.* gâchage à l'eau), d'obtenir des produits durcis pour le bâtiment, qui ont une conductivité thermique $\lambda$ réduite, allégés, mécaniquement résistants, peu volumineux avec de hauts rendement *volume de formulation humide (pâte) / volume ou masse de composition sèche.*

*COMPOSITIONS SECHES IMPLIQUEES DANS L'UTILISATION SELON L'INVENTION ET FORMULEES POUR DIFFERENTS PRODUITS DURCIS POUR LE BATIMENT*

*LIANT MINERAL (a)*

Avantageusement, le liant minéral (a) est choisi dans le groupe comprenant :

(i) les liants minéraux qui ne comportent pas de source(s) d'ions aluminium, de préférence parmi les ciments de portland et/ou parmi des ciments de laitier, des ciments géopolymères, des pouzzolanes naturelles, des cendres volantes, des ciments supersulfatés, les sulfates de calcium (gypse, hémihydrate et/ou anhydrite), les chaux (vive, éteinte et/ou hydraulique), et/ou les silicates de potassium, sodium, et/ou lithium ;
(ii) les liants minéraux qui comportent une ou plusieurs sources d'ions aluminium :

  ▪ de préférence parmi les ciments à base d'aluminate de calcium (CAC) et/ou à base de sulfo-aluminate de calcium (CSA) et/ou les liants à haute teneur en phases cimentaires riches en alumine ;
  ▪ et plus préférentiellement encore parmi les liants hydrauliques comprenant :

  • au moins une phase choisie parmi $C_3A$, CA, $C_{12}A_7$, $C_{11}A_7CaF_2$, $C_4A_3\$$ (yée lemite), $C_2A_{(1-x)}F_x$ (avec C → CaO ; A → $Al_2O_3$; F → Fe2O3 et x appartenant à ]0, 1]),
  • des phases amorphes hydrauliques présentant un ratio molaire C/A compris entre 0,3 et 15,
  • ces liants hydrauliques étant tels que les teneurs cumulées en $Al_2O_3$ de ces phases soient de préférence comprises entre :

    ◦ 3 et 70 % en poids du total du liant hydraulique ;
    ◦ préférentiellement entre 7 et 50% en poids ;
    ◦ et mieux entre 20 et 30% en poids.

Les liant hydrauliques (a.ii) de type sulfo-alumineux, formant principalement, lors de leur hydratation, de l'ettringite. Les clinkers sulfoalumineux sont obtenus à partir d'un mélange de carbonate de calcium sous forme calcaire, de bauxite, et de sulfate de calcium, qui est soit du gypse, de l'anhydrite ou de l'hémihydrate. Le constituant principal à l'issue du processus de fabrication est la Yeelimite, C4A3$. Une source possible de liant sulfo-alumineux est le CTS 25 Belitex (75% de CSA, 25% de gypse).

Selon une caractéristique remarquable de l'invention, la concentration en liant (a) de la composition sèche est comprise dans les gammes de concentrations suivantes, exprimées en % poids sec de la composition et données dans un ordre croissant de préférence : [15- 99,5]; [20 - 98] ; [25 - 97] ; [25- 96]; [30 - 95].

*POLYMERE SUPERABSORBANT -PSA-*

De préférence, la concentration en [PSA] dans la composition est définie comme suit, en % en poids sur sec, selon un ordre croissant de préférence :

$$0,1 \leq [PSA] \leq 20 ;$$

$$0,2 \leq [PSA] \leq 15 ;$$

$$0,3 \leq [PSA] \leq 10 ;$$

$$0,4 \leq [PSA] \leq 7 ;$$

$$0,5 \leq [PSA] \leq 6.$$

Les PSA sont par exemple des polymères pulvérulents :

- gonflables au moyen d'eau ou de solutions aqueuses de sels pour former un hydrogel, aptes à absorber au moins 30, 50, 100, 200, 300, 400 fois leur poids, selon un ordre croissant de préférence ;
- réticulables ;
- de poids moléculaire élevé ;
- soit anioniques et/ou cationiques ;
- et susceptibles d'être obtenus par polymérisation radicalaire de composés (par exemple vinyliques) éthyléniquement insaturés et par séchage ultérieur des polymères obtenus.

Les hydrogels sont, par exemple, des gels contenant de l'eau fixée à des polymères hydrophiles et réticulés selon des réseaux tridimensionnels.
De préférence, le PSA (b) est choisi dans le groupe comprenant ou mieux encore constitué par :

- les polyacrylates de sodium réticulés ;
- les copolymères réticulés d'acrylamide et d'acrylate de sodium ;
- les copolymères réticulés d'acrylate de sodium ou d'acrylamide et d'un composé comprenant au moins un groupement de type sulfonique et/ou phosphonique ;
- les copolymères réticulés d'amidon et d'acrylonitrile hydrolysés ;
- les copolymères réticulés d'anhydride maléique et d'éthylène ;
- les carboxyméthylcelluloses réticulées ;
- l'oxyde polyéthylènique réticulé ;
- et/ou les polymères à base d'alcool polyvinylique greffés par de l'acide phosphorique ;
- et leurs mélanges.

*ADJUVANTS*

Avantageusement, la composition selon l'invention comprend, outre les composants (a)-(b) au moins l'un des composants suivants :

(c) un retardateur de prise,
(d) un accélérateur de prise,
(e) un rétenteur d'eau,
(f) une charge,
(g) une charge légère,
(h) un hydrofugeant,
(i) un colorant,
(j) des fibres,
(k) un anti-mousse,
(1) une résine poudre redispersible,
(m) un agent rhéologique,
(n) un entraineur d'air ou agent moussant,
(o) un agent générateur de gaz,
(p) un ignifugeant.

Les adjuvants (c) à (p) ont pour rôle d'offrir une régularité des propriétés du matériau et permettent de remplir le cahier des charges précis propre à chaque application de la composition (e.g. cimentaire) sèche : mortier, enduit, colle, pâte.

*Retardateurs de prise (c) et accélérateurs de prise (d)*

Les retardateurs de prise (c) et les accélérateurs de prise (d) sont des produits solubles dans l'eau qui modifient les solubilités, les vitesses de dissolution et d'hydratation des divers constituants de la composition cimentaire sèche.

Le retardateur de prise (c) est de préférence choisi dans le groupe comprenant ou mieux encore constitué par les agents chélatant du calcium, les acides carboxyliques et leurs sel, les polysaccharides et leurs dérivés, les phosphonates, les lignosulphonates, les phosphates, les borates, et les sels de plomb, zinc, cuivre, arsenic et antimoine, et plus particulièrement parmi l'acide tartrique et ses sels, de préférence ses sels de sodium ou de potassium, l'acide citrique et ses sels, de préférence son sel de sodium (citrate trisodique), les gluconates de sodium; les phosphonates de sodium ; les sulfates et leurs sels de sodium ou de potassium, et leurs mélanges.

L'accélérateur de prise (d) est de préférence choisi dans le groupe comprenant ou mieux encore constitué par les sels alcalins et alcalino-terreux d'hydroxydes, d'halogénures, de nitrates, de nitrites, de carbonates, de thiocyanates, de sulfates, de thiosulfates, de perchlorates, de silice, d'aluminium, et/ou parmi les acides carboxylique et hydrocarboxyliques et leurs sels, les alcanolamines, les composés insolubles silicatés tels les fumées de silices, cendres volantes ou pouzzolanes naturelles, les sources d'ion aluminium, les ammonium quaternaires silicatés, les composés minéraux finement divisés tels les gels de silice ou les carbonates de calcium et/ou de magnésium finement divisés, et leurs mélanges ; cet accélérateur de prise étant de préférence choisi dans le groupe comprenant ou mieux encore constitué par parmi les chlorures et leurs sels de sodium ou calcium ; les carbonates et leurs sels de sodium ou lithium, les sulfates et leurs sels de sodium ou de potassium, les hydroxydes et formiates de calcium et leurs mélanges.

*Rétenteur d'eau (e)*

Le rétenteur d'eau (e) a la propriété de conserver l'eau de gâchage avant la prise. L'eau est ainsi maintenue dans la pâte d'enduit, mortier ou béton, ce qui lui confère une très bonne adhérence et une bonne hydratation. Dans une certaine mesure, elle est moins absorbée sur le support, le relargage en surface est limité et on a ainsi peu d'évaporation.

Le rétenteur d'eau (e) est de préférence choisi dans le groupe comprenant ou mieux encore constitué par les polysaccharides et de préférence les éthers de cellulose ou d'amidon et leurs mélanges, et de préférence dans le groupe comprenant les méthylcelluloses, les hydroxyéthylcelluloses, les méthylhydroxypropylcelluloses, les méthylhydroxyéthylcelluloses et leurs mélanges, ou parmi les éthers de guar modifiés ou non et leurs mélanges ou le mélange de ces différentes familles.

*Charge (f)*

La charge (f) est de préférence choisie dans le groupe comprenant ou mieux encore constitué par : les fillers et/ou les sables, de préférence parmi les sables siliceux, calcaires, silico-calcaires, magnésiens et leurs mélanges, les fillers siliceux, calcaires et silico-calcaires, magnésiens et leurs mélanges, et/ou parmi les oxydes métalliques, les alumines, et/ou parmi les billes de verre et les minéraux silicatés naturels et synthétiques de préférence choisis parmi les argiles, micas, métakaolins, laitiers, fumées de silice, silices précipitées, cendres volantes et leurs mélanges.

*Charge légère* (g)

La charge légère (g) est de préférence choisie dans le groupe comprenant ou mieux encore constitué par : la perlite expansée, la vermiculite expansé, les aérogels de silice, le polystyrène expansé, les cénosphères (fillites), les billes creuses d'alumine, les argiles expansées, les ponces, les billes de verre creuses (type 3M®) ou les granulés de verre expansés (poraver®, Liaver®), les grains de mousse de silicate, la rhyolithe (Noblite®), et leurs mélanges.

*Hydrofugeant (h)*

L'hydrofugeant (h) est de préférence choisi dans le groupe comprenant ou mieux encore constitué par les agents fluorés, silanisés, siliconés, siloxanés, les sels métalliques d'acides gras et leurs mélanges, de préférence parmi les sels de sodium, potassium et/ou magnésium des acides oléique et/ou stéarique et leurs mélanges.

*Colorant (i)*

Le colorant (i) est de préférence choisi dans le groupe comprenant ou mieux encore constitué par les pigments organiques et/ ou minéraux, et plus particulièrement parmi les oxydes de fer, de titane, de chrome, d'étain, de Nickel, de Cobalt, de Zinc, d'antimoine, et/ou parmi les aluminosilicates de sodium polysulfurés, le carbone, les sulfures de cobalt, de manganèse, de zinc, et/ou parmi les pigments à haute transparence ou haute réflectance aux infra-rouges et leurs mélanges.

*Fibres (j)*

Les fibres (j) sont choisies dans le groupe comprenant ou mieux encore constitué par les fibres minérales, animales, végétales et synthétiques, plus particulièrement dans le groupe comprenant ou mieux encore constitué par les fibres de polyamide, de polyacrylonitrile, de polyacrylate, de cellulose, de polypropylène, d'alcool polyvinylique, de verre, métalliques, de lin, de polycarbonate, de sisal, de jute, de chanvre et des mélanges de ces fibres.

*Anti-mousse (k)*

Les anti-mousses (k) sont utilisées afin d'augmenter la cohésion de l'enduit par limitation de la présence de bulles d'air. Ils permettent de réduire l'effet secondaire d'autres additifs ou conséquent au malaxage, entraînant de l'air.
L'anti-mousse (k) est de préférence choisi dans le groupe comprenant ou mieux encore constitué par les polyols de polyéther, les molécules hydrocarbonées, les molécules siliconés, esters hydrophobes, les tensioactifs non ioniques, les polyoxiranes, et leurs mélanges.

*Résine poudre redispersible (l)*

La résine poudre redispersible (l) est de préférence choisie dans le groupe comprenant ou mieux encore constitué par les familles des résines homo ou copolymères acryliques, copolymères de vinylacétate-éthylène, copolymères styrène-acrylique, les terpolymères d'acétate de vinyle, de versatate de vinyle et de dialkyl ester d'acide maléique, les copolymères d'acétate de vinyle et versatate de vinyle, les copolymères de styrène et butadiène et leurs mélanges.

*Entraineur d'air* ou *agent moussant (m)*

L'entraineur d'air (m) est de préférence choisi dans le groupe comprenant ou mieux encore constitué par les agents de surface ioniques ou non-ioniques, de préférence parmi les alkylsulfonates de sodium, et plus particulièrement les alpha-oléfines sulfonates de sodium en C14 et C16 et leurs mélanges.

*Agent rhéologique (n)*

L'agent rhéologique (n) est de préférence choisi dans le groupe comprenant ou mieux encore constitué par les agents épaississants, les agents fluidifiants (minéraux et/ou organiques) et leurs mélanges, et préférentiellement dans le sous-groupe comprenant ou mieux encore constitué par les polysaccharides et leurs dérivés, les alcools polyvinyliques, les épaississants minéraux, les polyacrylamides linéaires, les polynaphtalènes sulfonates, les polymélamines sulfonates, les polycarboxylates et leurs mélanges.

*Agent générateur de gaz* (o)

Les générateurs de gaz (o) in situ sont choisis parmi les adjuvants qui génèrent au contact des compositions suivant l'invention de l'oxygène, de l'hydrogène, de l'azote, du monoxyde ou dioxyde de carbone, de l'ammoniac, du méthane. Ils peuvent être choisis parmi les adjuvants décrits dans US 7, 288,147 et en particulier dans les familles des azodicarbonamide, sodium bicarbonate, peroxydes organiques ou inorganiques, toluene sulfonyl hydrazide, benzene sulfonyl hydrazide, toluene sulfonyl acetone hydrazone, toluene sulfonyl semicarbazide, phenyltetrazole, sodium borohydride, dinitroso pentamethylenetetramine.

*Ignifugeant (p)*

L'ignifugeant (p) est de préférence choisi dans le groupe comprenant ou mieux encore constitué par les agents retardateurs de flammes ayant des actions chimiques et/ou physiques, les retardateurs de flamme halogénés, les retardateurs de flamme phosphorés, les retardateurs de flamme azotés, les systèmes intumescents, les retardateurs de flamme minéraux, les hydroxydes métalliques, les composés de zinc, les borates, les oxydes d'antimoine, les nanocomposites basés sur les argiles à base de silicates d'aluminium, et leurs mélanges,
de préférence dans le sous-groupe comprenant ou mieux encore constitué par le TétrachlorobisphénolA (TBBPA), les chloroparaffines, les phosphates organiques, le phosphore rouge, les phosphonates, les phosphinates, la mélamine, ses sels et homologues, les hydroxydes d'aluminium ou de magnésium, les hydroxystannates de zinc, le borate de zinc, et leurs mélanges.

L'invention concerne également les combinaisons de composants (a) à (p) susceptibles d'être fournis séparément pour reconstituer au moment de l'utilisation la composition cimentaire sèche susvisée.

En particulier, il peut s'agir de mélanges prêts à l'emploi comprenant soit un monocomposant avec l'ensemble des composants nécessaires (a) à (p), soit un pluri-composant par exemple bi-composant comprenant d'une part, une partie des composants (a) à (p) susvisés et d'autre part, l'autre partie des composants (a) à (p) susvisés. Certaines parties des composants (a) à (p) susvisés, peuvent être incorporées dans le liquide (par exemple l'eau) de gâchage, qui se présente alors sous la forme d'une dispersion.

*FORMULATION HUMIDE*

Selon un autre de ses aspects, l'utilisation selon l'invention implique une formulation humide pour le bâtiment formée par un mélange d'un liquide, de préférence de l'eau, et de la composition (e.g. cimentaire) sèche ci-dessus définie. Ce mélange est avantageusement effectué selon un taux de gâchage supérieur ou égal à, en % en poids et selon un ordre croissant de préférence : 20 ; 25 ; 30 ; 40 ; 45 ; 50 ; 60; 70 ; 80 ; 90 ; 100.

En particulier, cette formulation humide peut être utilisée pour obtenir des produits durcis allégés pour le bâtiment, tels que des revêtements ou enduits extérieurs ou intérieurs (e.g. système d'isolation thermique par l'extérieur -ITE-/décoration/protection/ imperméabilisation), des colles, des objets massiques....

*PRODUITS DURCIS POUR LE BATIMENT*

On cite ci-après à titre d'exemples des produits durcis concernés par l'utilisation selon l'invention :

- produits obtenus sur chantier par durcissement des formulations humides résultant du gâchage des compositions suivant l'invention, e.g. :

  ◦ Mortiers colles, joints, enduits de ragréage, enduits de lissage ;
  ◦ chapes, chapes allégées pour sols chauffant ;
  ◦ Revêtements extérieurs de type Revêtements Minéraux Epais (RME) ou Minces (RMM) et les peintures minérales ;
  ◦ Composants des systèmes d'Isolation Thermique par l'Extérieur (ITE) incluant la colle pour isolant, le sous enduit servant à fixer le treillis et l'enduit extérieur de finition ;
  ◦ Colles à carrelage ;
  ◦ Joints de carrelage ;
  ◦ Enduits de jointement ;
  ◦ Enduits intérieurs et extérieurs, par exemple les enduits monocouches ;
  ◦ Matériau isolant pour l'extérieur ou l'intérieur des bâtiments ;
  ◦ Mortiers ou bétons de remplissage ;
  ◦ Mortier de calage et de scellement, mortiers de réparation pour bétons, mortiers résistants au gel dégel, système d'imperméabilisation des bétons, membranes d'étanchéité ;
◦ Coulis d'injection, coulis allégés pour la cimentation des puits de pétrole ;
◦ Mortiers ou Bétons allégés destinés à être mis en place par projection ou coulage dans des parois creuses ou dans des coffrages perdus pour la réalisation de bâtiments neufs ou la rénovation de bâtiments anciens.

• produits préfabriqués en milieu industriel par durcissement des formulations humides résultant du gâchage des compositions suivant l'invention e.g. :

◦ Panneaux préfabriqués allégés destinés au montage des bâtiments (éléments porteurs pour la structure ou panneaux d'isolation) ;
◦ Blocs bétons allégés destinés à être utilisés comme éléments de structure ou d'isolation ou de parement ;
◦ Eléments préfabriqués, tels que rebords de fenêtre, cornières, moulures etc.

Les produits durcis plus spécialement concernés par l'invention sont les revêtements de finition allégés ou semi allégés qui sont une nouvelle génération alternative aux revêtements commerciaux existant (de type MONOREX®) et contenant des charges légères de type Poraver®, vermiculite, perlite... L'une des caractéristiques essentielles apportées par le mélange liant minéral (a) / PSA (b) est l'allègement d'un revêtement de finition.

Les compositions sèches à l'origine de ces revêtements ont avantageusement de faibles teneurs en PSA (b), de préférence inférieures ou égales à 2-3% en poids sur sec et des taux de gâchage de préférence inférieurs ou égaux à 20% -30%.

Le PSA (b) est un moyen avantageux de remplacer économiquement par exemple la charge légère (h) en apportant les bénéfices suivants :

• réduction de la dépendance à des variations de caractéristiques de matières premières dans le cas des fillites, perlites, vermiculites, attapulgites ;
• réduction de l'empreinte $CO_2$ et du coût lié au transport de matières premières à très faible densité ;
• réduction du poids et du volume des compositions sèches via l'amélioration du ratio ;
• meilleure reproductibilité de l'allégement, la quantité d'air dans la matrice durcie dépendant au premier ordre de la quantité d'eau de gâchage.

D'autres produits durcis plus spécialement concernés par l'invention, sont les matériaux isolants mis en place in situ sur les chantiers ou bien préparés sous forme de pièces préfabriquées dans des environnements industriels. L'une des caractéristiques essentielles apportées par le mélange liant minéral (a) / PSA (b) est l'abaissement de la conductivité thermique. Ces matériaux isolants sous forme d'enduits ou de pièces préfabriquées ont avantageusement des teneurs élevées en PSA (b), de préférence supérieures ou égales à 2-3% et des taux de gâchage de préférence supérieurs ou égaux à 30%- 50%, préférentiellement à 100%.

Les valeurs de lambda visées sont avantageusement inférieures ou égales à celles des matériaux YTONG, à savoir par exemple inférieures ou égales à 0,08 pour les éléments de structure, pour une résistance mécanique d'environ 2 à 3 MPa et par exemple inférieures ou égales à 0,05 pour des éléments non structuraux avec des résistances mécaniques supérieures ou égales à 0,5 Mpa.

Les produits durcis selon l'invention comprennent un liant minéral (a) et au moins un Polymère SuperAbsorbant -PSA- (b) :

• dont la conductivité thermique $\lambda$ (W.m$^{-1}$.K$^{-1}$), est inférieure à 1,0, préférentiellement inferieure ou égale à 0,95 et préférentiellement inférieure ou égale à 0,90 ;
• et dont le gain en baisse de conductivité thermique $\lambda$ (W.m$^{-1}$.K$^{-1}$), par rapport à un produit durci sans PSA (b), est, supérieur ou égal à 10%, de préférence à 15% et préférentiellement à 20%.

## EXEMPLES

## I. MATERIAUX MIS EN OEUVRE :

1.1 Liants (a) minéraux

Ciment Portland CEM I, 52,5N

Aluminates de Calcium

DENKA® SC-1 de Newchem® [Al2O3 22 - 25 % - CaO 39 - 45 % -SO3 26 - 30 %] TERNAL® RG de Kerneos® [- CaO.Al2O3 - 2CaO.Al2O3.SiO2- 12CaO.7Al2O3 - 2CaO.SiO2 - 4CaO.Al2O3.Fe2O3]

Ciment Sulfo-Alumineux

Liant hydraulique de type sulfo-alumineux, formant principalement, lors de son hydratation, de l'ettringite. Les clinkers sulfoalumineux sont obtenus à partir d'un mélange de carbonate de calcium, sous forme calcaire, de bauxite, et de sulfate de calcium qui est doit du gypse, de l'anhydrite ou de l'hémihydrate. Le constituant principal à l'issu du processus de fabrication est la Yeelimite, C4A3$. Une source possible de liant sulfoalumineux est le CTS 25 Belitex (75% de CSA, 25% de sulfates).

Chaux

Chaux aérienne : Chaubat CL90 de la société Bonargent-Goyon.
Chaux blanche hydraulique NHL-3.5Z CE commercialisée par Lafage ciments, usine du Cruas. Composition : Chaux 89%, CEM II/A-LL 42,5 N CE PM-CP2 NF "blanc : 11%
Sulfates : Prestia selecta : semihydrate béta très finement broyé : 0.1%>160 microns. 1.2 Polymère SuperAbsorbant (b)
Aquasorb ®3005S : Copolymère réticulé d'acrylamide et d'acrylate de potassium de SNF ® FLOERGER
Luquasorb FP800 de BASF : polyacrylate de sodium réticulé.

1.3 composant accélérateur (c)

1. SA 502 Axilat ®: alumine "flash" 100% amorphe de Momentive®.
2. Carbonate de lithium grade fin de RODACHEM. Teneur en Li2CO3 > 99%. Densité 2,049 g/cm3, granulométrie moyenne 66 $\mu$m.

1.4 Retardateur (d)

Acide citrique anhydre grain fin, de la société Gadot biochemical industries, teneur en eau 0.2%max, 5% maximum de refus au travers d'un tamis de 590 micromètres.

1.5 Retenteur d'eau (e)

Ethers de cellulose : METHOCEL 306 de viscosité type 38,000 mPa.s (viscosimètre rotatif Brookfield, modèle RV, 20 tr/min, 2% dans de l'eau à 20°C).
Ether d'amidon : Solvitose H20/60 : Ether d'amidon prégélatinisé, pH de 11 pour une solution à 5%, Viscosité Brookfield (solution à 6.8 % dans de l'eau déminéralisée à 25°C, n = 20 min-1, mobile n° 4) : environ 15000 mPa.s.

1.6 charge (f)

Sable (PE2LS) ou Fulchiron PE2LS : sablon siliceux de diamètre maximal inférieur ou égal 0,4 0,315 mm (Fournisseur : carrières de Fulchiron).

### 1.7 Hydrofugeant (h)

Stéarate de Magnésium : grade technique commercialisé par la société Peter Greven. Savon de magnésium obtenu à partir de stéarine grade technique.
Oléate de Sodium : Poudre fine, de couleur blanche à jaune léger, commercialisée par la société Peter Greven. Savon de soude obtenu avec de l'acide oléique technique.

### 1.8 Colorant (i)

Pigment Bayferrox Rouge 110 : oxyde de fer synthétique $\alpha$ Fe2O3, 96% de Fe2O3, liant barytine, pouvoir colorant relatif entre 95 et 105%, commercialisé par la société Bayer.

### 1.9 Fibres (i)

Fibres polyacrylonitrile FPAC 243/125, commercialisée par la société STW SCHWARWALDER TEXTIL WERKE, densité spécifique 1.18g/cm3, teneur en humidité maximum 2%, longueur approximative 0.8mm.

### 1.10 Antimousse (k)

PERAMIN DEFOAM 50 PE de la société Kerneos. Mélange d'esters hydrophobes, poudre blanche, granulométrie : 99% < 600$\mu$m.

### 1.11 Résine poudre redispersible (1)

Poudre de polymère redispersible (VINNAPAS ®5010N) :
Résine redispersible dans l'eau de la société WACKER. Copolymère vinyl/acétate éthylène. Matière solide 98-100%, cendre : 8-13% colloïde protecteur polyvinylique alcool, granulométrie max. 4% de refus à 400 $\mu$m, granulométrie prédominante 0,5-8 $\mu$m, température de formation du film 4°C.

### 1.12 Agent rhéologique (m)

Epaississant : Pangel S9 : sépiolite fabriquée par la société TOLSA. Argile minérale appartenant à la famille des phyllosilicates et dont la nature chimique est un silicate de magnésium hydraté. Composition : Sépiolite (sans amiante) 85 %, Autres argiles 15 %.
Fluidifiant : Melment F10 : Superplastifiant à base de polymélaminesulfonate pour mortiers à base de ciment ou sulfate de calcium.

### 1.13 Entraineur d'air (n)

Hostapur OSB : sulphonate de sodium en poudre commercialisé par la société ShinEtsu, teneur en eau maximum 2%, 15 à 45% de particules < 100 $\mu$m.

### 1.14 Ignifugeant (p)

Portaflame sg200, hydroxyde d'aluminium synthétique commercialisé par la société SA MINERAIS DE MEDITERRANEE.

**II. TESTS :**

II.1 Mode opératoire pour la mesure de conductivité thermique λ au CT-mètre

1/ Principe de fonctionnement :

Son principe consiste, grâce à l'association d'un élément chauffant et d'un capteur de température (tous deux associés dans la même sonde), à mesurer l'élévation de température subie par le capteur placé entre 2 maquettes de mortier, au cours d'une période de chauffage définie.

2/ Appareillage :

CT-mètre, composé de 2 éléments :

  ◦ L'organe de commande, chargé de générer la puissance de chauffe et d'interpréter la courbe d'élévation de température induite dans le matériau à tester.

  ◦ La sonde, chargée de transmettre la puissance de chauffe et de recueillir la température induite (thermocouple). Dans le cas présent, il s'agit d'une sonde monotige 80/A (80mm de longueur).

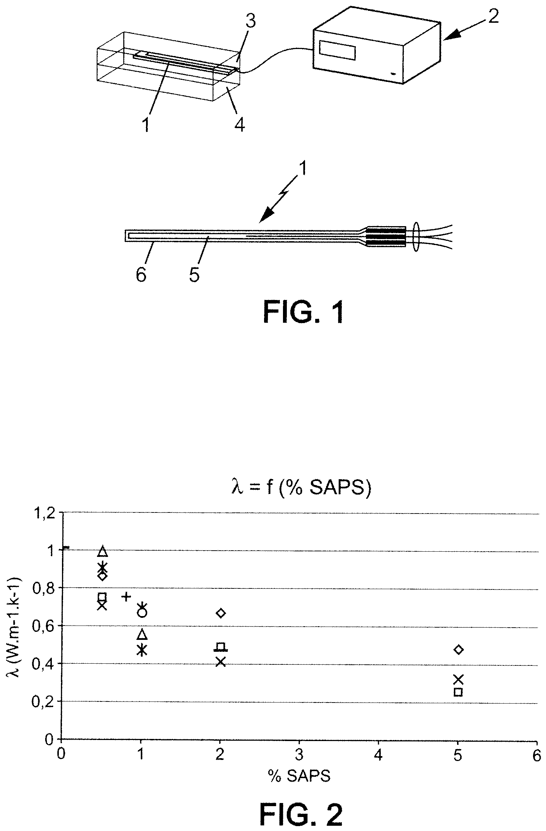

La figure 1 annexée montre le schéma de principe de la mesure de conductivité thermique par la méthode du fil chaud à l'aide d'un CT-mètre. Ce dernier comprend une sonde (1) reliée à un générateur (2) d'échelon de puissance et d'acquisition $\Delta T = f(t)$. Cette sonde (1) qui est destinée à être placée entre 2 éprouvettes (3,4), a une longueur de 80 mm. Elle comprend un thermocouple (5) permettant d'augmenter la température d'un élément chauffant (6).

3/ Préparation des éprouvettes :

Réaliser les éprouvettes du produit à tester selon la norme NF EN 1015-11 dans des moules 4x14x16 (2 éprouvettes, réalisées dans les mêmes conditions, sont nécessaires pour une mesure) et les stocker dans les conditions spécifiées par la norme.
La face inférieure de l'éprouvette sera en contact avec la sonde, elle doit être la plus lisse et plane possible pour une meilleure fiabilité de la mesure.

4/ Mode opératoire CT-mètre :

- Placer et centrer la sonde (1) entre les 2 éprouvettes (3,4).
- Régler les paramètres de programmation de la sonde :

  ◦ Longueur (valeur de la longueur de l'élément chauffant à saisir en mètre) : 0,08m ;
  ◦ Résistance (valeur de la résistance de l'élément chauffant à saisir en Ohms) : les sondes sont fournies avec une indication précise de leur résistance en Ohms ;
  ◦ Puissance (valeur de la puissance à injecter dans l'élément chauffant à saisir en Watts) : elle est fonction de la longueur de l'élément chauffant, de sa résistance et de la valeur vers laquelle la mesure de conductivité thermique va tendre. Son paramétrage peut être guidé par la variation de température maximale affichée pendant l'essai, qui doit être comprise entre 10 et 15°C :

    ■ Si la variation de température est < 10°C : augmenter la puissance de chauffe ;
    ■ Si la variation de température est > 15°C : diminuer la puissance de chauffe.

La sonde monotige est adaptée à des valeurs de conductivité thermique comprises entre 0 et 1,5 W/(m.K). La puissance est donc généralement comprise entre 0 et 2 W.
Attention : La mesure provoque un échauffement du matériau à mesurer, bien respecter un temps de refroidissement du matériau entre 2 mesures.
  ◦ Temps de mesure / chauffage (valeur à saisir en secondes) : 180s ;

◦ Pas de scrutation (valeur à saisir en secondes) : 2s ;

◦ Variation maximale de température admissible (valeur à saisir en °C) : 25°C. Elle a pour objet de protéger la sonde contre un échauffement destructif (arrêt du chauffage et de la mesure en cas de dépassement de cette température de consigne).

• Exécuter la mesure :

o Le cycle se déroule automatiquement et, à l'issu du temps de mesure programmé, l'afficheur transmet la conductivité thermique (en W/(m.K)).

II.2 Mode opératoire pour la détermination des résistances en flexion et compression

La norme servant au test de détermination des résistances en flexion Rf et compression Rc est la NF EN 196-1.

## III. ESSAIS ET RESULTATS

Mode opératoire

Préparation des mélanges secs « Dry Mix » :

Les matières premières en poudre sont pesées indépendamment en suivant les formulations. Les matières premières sont alors mélangées dans un mélangeur poudre de type « GUEDU » durant 3 minutes.

Gâchage des « Dry Mix »

Les mortiers sec obtenus sont gâchés avec l'eau nécessaire afin d'obtenir une pâte homogène, dans un mélangeur planétaire de type « PERRIER », pendant une minute et trente secondes.

Rf, Rc et $\lambda$ sont mesurés comme expliqué en II supra.

| Résultats 28j | | | |
|---|---|---|---|
| | | | |
| **IV.1 - exemple 1 ; composition sans PSA** | | | |
| | | | |
| | essai 0 | | |
| taux de gâchage | 16,0% | | |
| Rf (MPa) | 2,61 | | |
| Rc (MPa) | 5,87 | | |
| $\lambda$ (W.m-1.K-1) | 1,013 | | |
| | | | |
| **IV.2 -exemple 2 : Portland** | | | |
| | | | |
| | essai 1 | essai 2 | essai 3 |
| cem 52,5 Le Havre | 99,5 | 98 | 95 |
| Aquasorb 3005S | 0,5 | 2 | 5 |
| taux de gâchage | 48,8% | 85,0% | 165,0% |
| Rf (MPa) | **4,39** | **3,33** | **1,50** |
| Rc (MPa) | **44,80** | **13,90** | **3,30** |
| $\lambda$ (W.m$^{-1}$.K$^{-1}$) | **0,861** | **0,667** | 0,477 |
| | | | |

(suite)

| IV.3 - Portland + source d'alumine | | | |
|---|---|---|---|
| | | | |
| | essai 4 | | |
| cem 52,5 Le Havre | 93 | | |
| Aquasorb 3005S | 2 | | |
| Denka SC1 | 5 | | |
| taux de gâchage | 85,0% | | |
| Rf (MPa) | **3,50** | | |
| Rc (MPa) | **12,60** | | |
| $\lambda$ (W.m$^{-1}$.K$^{-1}$) | **0,472** | | |
| **IV.4 - CAC** | | | |
| | essai 5 | essai 6 | essai 7 |
| Ternal RG | 69,65 | 68,6 | 66,5 |
| Gypse | 29,85 | 29,4 | 28,5 |
| Aquasorb 3005S | 0,50 | 2,00 | 5,00 |
| Taux de gâchage | 42,0% | 85,0% | 165,0% |
| Rf (MPa) | **5,18** | **2,34** | 1,40 |
| Rc (MPa) | **37,40** | **10,00** | 4,30 |
| $\lambda$ (W.m$^{-1}$.K$^{-1}$) | **0,747** | **0,489** | **0,257** |
| | | | |
| **IV.5 - CSA** | | | |
| | essai 8 | essai 9 | essai 10 |
| CSA | 74,5 | 73 | 70 |
| Gypse | 25 | 25 | 25 |
| Aquasorb 3005S | 0,5 | 2 | 5 |
| Taux de gâchage | 47,0% | 85,0% | 167,0% |
| Rf (MPa) | **4,04** | **1,73** | **1,34** |
| Rc (MPa) | **37,90** | **11,70** | 4,30 |
| $\lambda$ (W.m$^{-1}$.K$^{-1}$) | 0,704 | **0,413** | **0,326** |
| | | | |
| **IV.6 - Portland + sables** | | | |
| | | | |
| | essai 11 | essai 12 | |
| cem 52,5 Le Havre | 12 | 12 | |
| BL200 | 5,3 | 5,2 | |
| PE2LS | 34,8 | 34,6 | |
| TH1000 | 47,4 | 47,2 | |
| Aquasorb 3005S | 0,5 | 1 | |
| taux de gâchage | 34,0% | 47,5% | |

(suite)

| **IV.6 - Portland + sables** | | | |
|---|---|---|---|
| | | | |
| | essai 11 | essai 12 | |
| Rf (MPa) | **1,47** | **0,70** | |
| Rc (MPa) | **3,3** | **1,5** | |
| λ (W.m$^{-1}$.K$^{-1}$) | **0,985** | **0,554** | |
| **IV.7 - CAC + sables** | | | |
| | | | |
| | essai 13 | essai 14 | essai 15 |
| Ternal RG | 8,4 | 8,4 | 21 |
| Gypse | 3,6 | 3,6 | 9 |
| BL200 | 5,3 | 5,2 | 4,2 |
| PE2LS | 34,8 | 34,6 | 27,4 |
| TH1000 | 47,4 | 47,2 | 37,4 |
| Aquasorb 3005S | 0,5 | 1 | 1 |
| *taux de gâchage* | 31,0% | 44,5% | 48,0% |
| Rf (MPa) | **0,72** | **0,23** | **1,70** |
| Rc (MPa) | **2,5** | **0,7** | **5,0** |
| λ (W.m$^{-1}$.K$^{-1}$) | **0,903** | **0,475** | **0,688** |
| | | | |
| **IV.8 - Portland + chaux + sables** | | | |
| | | | |
| | essai 16 | | |
| CEM I 52.5 N CE CP2 NF BLANC (LE TEIL) | 12 | | |
| CHAUX BLANCHE NHL 3.5-Z CE | 5 | | |
| GRANULE PK2 | 4,0 | | |
| BL 200 | 7,9 | | |
| GRANULE PK14 | 13,8 | | |
| SGL15 / GS14 / CHC15 | 10,5 | | |
| TH1000LS | 14,2 | | |
| PE2LS | 31,6 | | |
| Aquasorb 3005S | 1 | | |
| Taux de gâchage | 43,0% | | |
| Rf (MPa) | **1,10** | | |
| Rc (MPa) | **2,40** | | |
| λ (W.m$^{-1}$.K$^{-1}$) | **0,666** | | |

(suite)

| IV.9 - Formule Monocouche avec PSA | | | |
|---|---|---|---|
| | | | |
| | essai 17 | | |
| CEM I 52.5 BLANC | 34,80 | | |
| chaux CL90 U45 | 11,13 | | |
| aquasorb 3005 S | 0,80 | | |
| CALGAR 0,5/1,5 | 52,52 | | |
| methocel 306 | 0,03 | | |
| solvitose H20/60 | 0,37 | | |
| stéarate de Mg | 0,25 | | |
| oléate de Na | 0,10 | | |
| Taux de gâchage | 54,0% | | |
| Rf (MPa) | **1,95** | | |
| Rc (MPa) | **6,10** | | |
| $\lambda$ (W.m$^{-1}$.K$^{-1}$) | **0,750** | | |

La figure 2 annexée montre les courbes $\lambda$ = f([PSA en % en poids]) pour les 9 séries d'essais IV.1 à IV.9. La légende de ces courbes est donnée ci-après :

| | |
|---|---|
| - | Monocouche MOGM : formule sans SAPS |
| ◇ | Portland |
| □ | CAC |
| × | CSA |
| Δ | Portland + sables |
| ✱ | CAC + sables |
| ○ | Portland + chaux + sables |
| + | Formule Monocouche avec SAPS |
| - | Portland + source d'alumine |

Commentaires : les courbes de la figure 2 montrent le gain en réduction de $\lambda$ procuré par l'utilisation de mélanges liant minéral (a) superabsorbant PSA (b) selon l'invention.

**Revendications**

1. Utilisation d'un mélange comprenant un liant minéral (a) et au moins un Polymère SuperAbsorbant -PSA- (b), pour améliorer les caractéristiques thermiques d'un produit durci destiné au bâtiment, par abaissement de sa conductivité thermique $\lambda$ (W.m$^{-1}$.K$^{-1}$), ce produit durci étant obtenu à partir d'une composition sèche ou d'une formulation humide à prise hydraulique comprenant ce mélange.

2. Utilisation selon la revendication 1 **caractérisée en ce que** la conductivité thermique $\lambda$ (W.m$^{-1}$.K$^{-1}$) du produit durci est inférieure à 1,0, préférentiellement inferieure ou égale à 0,95 et préférentiellement inférieure ou égale à 0,90.

3. Utilisation selon la revendication 1 ou 2 **caractérisée en ce que** le gain en baisse de conductivité thermique $\lambda$ (W.m$^{-1}$.K$^{-1}$) du produit durci, par rapport à un produit durci sans PSA (b), est supérieur ou égal à 10%, de préférence à 15% et préférentiellement à 20%.

4. Utilisation selon l'une au moins des revendications précédentes, **caractérisée en ce que** le liant hydraulique (a) de la composition est choisi dans le groupe comprenant :

(i) les liants minéraux qui ne comportent pas de source(s) d'ions aluminium, de préférence parmi les ciments de portland et/ou parmi des ciments de laitier, des ciments géopolymères, des pouzzolanes naturelles, des cendres volantes, des ciments supersulfatés, les sulfates de calcium (gypse, hémihydrate et/ou anhydrite), les chaux (vive, éteinte et/ou hydraulique), les silicates de potassium, sodium, et/ou lithium ;
(ii) les liants minéraux qui comportent une ou plusieurs sources d'ions aluminium ;

- de préférence parmi les ciments à base d'aluminate de calcium (CAC) et/ou à base de sulfo-aluminate de calcium (CSA) et/ou les liants à haute teneur en phases cimentaires riches en alumine ;
- et plus préférentiellement encore parmi les liants hydrauliques comprenant :

• au moins une phase choisie parmi $C_3A$, $CA$, $C_{12}A_7$, $C_{11}A_7CaF_2$, $C_4A_3\$$ (yée lemite), $C_2A_{(1-x)}F_x$ (avec $C \rightarrow CaO$ ; $A \rightarrow Al_2O_3$; $F \rightarrow Fe2O3$ et x appartenant à ]0, 1]) ;
• des phases amorphes hydrauliques présentant un ratio molaire C/A compris entre 0,3 et 15 ;
• ces liants hydrauliques étant tels que les teneurs cumulées en $Al_2O_3$ de ces phases soient de préférence comprises entre :

○ 3 et 70 % en poids du total du liant hydraulique ;
○ préférentiellement entre 7 et 50% en poids ;
○ et mieux entre 20 et 30% en poids.

5. Utilisation selon l'une au moins des revendications précédentes **caractérisée en ce que** la concentration en [PSA] dans la composition est définie comme suit, en % en poids sur sec, selon un ordre croissant de préférence :

$$0,1 \leq [PSA] \leq 20 ;$$

$$0,2 \leq [PSA] \leq 15 ;$$

$$0,3 \leq [PSA] \leq 10 ;$$

$$0,4 \leq [PSA] \leq 7 ;$$

$$0,5 \leq [PSA] \leq 6.$$

6. Utilisation selon l'une au moins des revendications précédentes, **caractérisée en ce que** le PSA (b) est choisi dans le groupe comprenant ou mieux encore constitué par :

- les polyacrylates de sodium réticulés ;
- les copolymères réticulés d'acrylamide et d'acrylate de sodium ;
- les copolymères réticulés d'acrylate de sodium ou d'acrylamide et d'un composé comprenant au moins un groupement de type sulfonique et/ou phosphonique ;
- les copolymères réticulés d'amidon et d'acrylonitrile hydrolysés ;
- les copolymères réticulés d'anhydride maléique et d'éthylène ;
- les carboxyméthylcelluloses réticulées ;
- l'oxyde polyéthylènique réticulé ;
- et/ou les polymères à base d'alcool polyvinylique greffés par de l'acide phosphorique ;
- et leurs mélanges.

7. Utilisation selon l'une au moins des revendications précédentes, **caractérisée en ce que** la composition comprend, outre les composants (a)-(b) au moins l'un des composants suivants :

(c) un retardateur de prise ;
(d) un accélérateur de prise ;
(e) un rétenteur d'eau ;
(f) une charge ;
(g) une charge légère ;
(h) un hydrofugeant ;
(i) un colorant ;
(j) des fibres ;
(k) un anti-mousse ;
(l) une résine poudre redispersible ;
(m) un agent rhéologique ;
(n) un entraineur d'air ou agent moussant ;
(o) un agent générateur de gaz ;
(p) un ignifugeant.

8. Utilisation selon l'une au moins des revendications précédentes dans laquelle la composition a au moins l'une des caractéristiques suivantes :

• le retardateur de prise (c) est de préférence choisi dans le groupe comprenant ou mieux encore constitué par les agents chélatant du calcium, les acides carboxyliques et leurs sel, les polysaccharides et leurs dérivés, les phosphonates, les lignosulphonates, les phosphates, les borates, et les sels de plomb, zinc, cuivre, arsenic et antimoine, et plus particulièrement parmi l'acide tartrique et ses sels, de préférence ses sels de sodium ou de potassium, l'acide citrique et ses sels, de préférence son sel de sodium (citrate trisodique), les gluconates de sodium; les phosphonates de sodium ; les sulfates et leurs sels de sodium ou de potassium, et leurs mélanges ;

• l'accélérateur de prise (d) est choisi dans le groupe comprenant ou mieux encore constitué par les sels alcalins et alcalino-terreux d'hydroxydes, d'halogénures, de nitrates, de nitrites, de carbonates, de thiocyanates, de sulfates, de thiosulfates, de perchlorates, de silice, d'aluminium, et/ou parmi les acides carboxylique et hydrocarboxyliques et leurs sels, les alcanolamines, les composés insolubles silicatés tels les fumées de silices, cendres volantes ou pouzzolanes naturelles, les sources d'ion aluminium, les ammonium quaternaires silicatés, les composés minéraux finement divisés tels les gels de silice ou les carbonates de calcium et/ou de magnésium finement divisés, et leurs mélanges; cet accélérateur de prise étant de préférence choisi dans le groupe comprenant ou mieux encore constitué par parmi les chlorures et leurs sels de sodium ou calcium ; les carbonates et leurs sels de sodium ou lithium, les sulfates et leurs sels de sodium ou de potassium, les hydroxydes et formiates de calcium et leurs mélanges ;

• le rétenteur d'eau (e) est choisi dans le groupe comprenant ou mieux encore constitué par les polysaccharides et de préférence les éthers de cellulose ou d'amidon et leurs mélanges, et de préférence dans le groupe comprenant les méthylcelluloses, les hydroxyéthylcelluloses, les méthylhydroxypropylcelluloses, les méthylhydroxyéthylcelluloses et leurs mélanges, ou parmi les éthers de guar modifiés ou non et leurs mélanges ou le mélange de ces différentes familles ;

• la charge (f) est choisie dans le groupe comprenant ou mieux encore constitué par : les fillers et/ou les sables, de préférence parmi les sables siliceux, calcaires, silico-calcaires, magnésiens et leurs mélanges, les fillers siliceux, calcaires et silico-calcaires, magnésiens et leurs mélanges, et/ou parmi les oxydes métalliques, les alumines, et/ou parmi les billes de verre et les minéraux silicatés naturels et synthétiques de préférence choisis parmi les argiles, micas, métakaolins, fumées de silice et leurs mélanges ;

• la charge légère (g) est choisie dans le groupe comprenant ou mieux encore constitué par : la perlite expansée, la vermiculite expansé, les aérogels de silice, le polystyrène expansé, les cénosphères (fillites), les billes creuses d'alumine, les argiles expansées, les ponces, les billes de verre creuses ou les granulés de verre expansés, les grains de mousse de silicate, la rhyolithe, et leurs mélanges ;

• l'hydrofugeant (h) est choisi dans le groupe comprenant ou mieux encore constitué par les agents fluorés, silanisés, siliconés, siloxanés, les sels métalliques d'acides gras et leurs mélanges, de préférence parmi les sels de sodium, potassium et/ou magnésium des acides oléique et/ou stéarique et leurs mélanges ;

• le colorant (i) est choisi dans le groupe comprenant ou mieux encore constitué par les pigments organiques et/ ou minéraux, et plus particulièrement parmi les oxydes de fer, de titane, de chrome, d'étain, de Nickel, de Cobalt, de Zinc, d'antimoine, et/ou parmi les aluminosilicates de sodium polysulfurés, le carbone, les sulfures de cobalt, de manganèse, de zinc, et/ou parmi les pigments à haute transparence ou haute réflectance aux infra-rouges et leurs mélanges.

• Les fibres (j) sont choisies dans le groupe comprenant ou mieux encore constitué par les fibres minérales, animales, végétales et synthétiques, plus particulièrement dans le groupe comprenant ou mieux encore constitué par les fibres de polyamide, de polyacrylonitrile, de polyacrylate, de cellulose, de polypropylène, d'alcool polyvinylique, de verre, métalliques, de lin, de polycarbonate, de sisal, de jute, de chanvre et des mélanges de ces fibres ;

• l'anti-mousse (k) est choisi dans le groupe comprenant ou mieux encore constitué par les polyols de polyéther, les molécules hydrocarbonées, les molécules siliconés, esters hydrophobes, les tensioactifs non ioniques, les polyoxiranes, et leurs mélanges ;

• la résine poudre redispersible (l) est choisie dans le groupe comprenant ou mieux encore constitué par les familles des résines homo ou copolymères acryliques, copolymères de vinylacétate-éthylène, copolymères styrène-acrylique, les terpolymères d'acétate de vinyle, de versatate de vinyle et de dialkyl ester d'acide maléique, les copolymères d'acétate de vinyle et versatate de vinyle, les copolymères de styrène et butadiène et leurs mélanges ;

• l'agent rhéologique (m) est choisi dans le groupe comprenant ou mieux encore constitué par les agents épaississants, les agents fluidifiants (minéraux et/ou organiques) et leurs mélanges, et préférentiellement dans le sous-groupe comprenant ou mieux encore constitué par les polysaccharides et leurs dérivés, les alcools polyvinyliques, les épaississants minéraux, les polyacrylamides linéaires, les polynaphtalènes sulfonates, les polymélamines sulfonates, les polycarboxylates et leurs mélanges ;

• l'entraineur d'air (n) est choisi dans le groupe comprenant ou mieux encore constitué par les agents de surface ioniques ou non-ioniques, de préférence parmi les alkyl sulfonates de sodium, et plus particulièrement les alpha-oléfines sulfonates de sodium en C14 et C16 et leurs mélanges ;

• Le générateur de gaz (o) in situ est choisi parmi les adjuvants qui génèrent au contact des compositions suivant l'invention de l'oxygène, de l'hydrogène, de l'azote, du monoxyde ou dioxyde de carbone, de l'ammoniac, du méthane. Ils peuvent être choisis parmi les adjuvants décrits dans US 7, 288,147 et en particulier dans les familles des azodicarbonamide, sodium bicarbonate, peroxydes organiques ou inorganiques, toluene sulfonyl hydrazide, benzene sulfonyl hydrazide, toluene sulfonyl acetone hydrazone, toluene sulfonyl semicarbazide, phenyltetrazole, sodium borohydride, dinitroso pentamethylenetetramine ;

• l'ignifugeant (p) est choisi dans le groupe comprenant ou mieux encore constitué par les agents retardateurs de flammes ayant des actions chimiques et/ou physiques, les retardateurs de flamme halogénés, les retardateurs de flamme phosphorés, les retardateurs de flamme azotés, les systèmes intumescents, les retardateurs de flamme minéraux, les hydroxydes métalliques, les composés de zinc, les borates, les oxydes d'antimoine, les nanocomposites basés sur les argiles à base de silicates d'aluminium, et leurs mélanges :

de préférence dans le sous-groupe comprenant ou mieux encore constitué par le TétrachlorobisphénolA (TBBPA), les chloroparaffines, les phosphates organiques, le phosphore rouge, les phosphonates, les phosphinates, la mélamine, ses sels et homologues, les hydroxydes d'aluminium ou de magnésium, les hydroxystannates de zinc, le borate de zinc, et leurs mélanges.

9. Utilisation selon l'une au moins des revendications précédentes **caractérisée en ce que** la formulation humide présente un taux de gâchage supérieur ou égal à, en % poids et dans un ordre croissant de préférence 20 ; 25 ; 30 ; 40 ; 45 ; 50.

## Patentansprüche

1. Verwendung einer Mischung, welche ein mineralisches Bindemittel (a) aufweist und wenigstens einen Polymer-Superabsorber (PSA) (b), zum Verbessern der thermischen Eigenschaften eines gehärteten Produkts für den Bausektor durch Herabsetzen seiner thermischen Leitfähigkeit $\lambda$ (W.m$^{-1}$.K$^{-1}$), wobei dieses gehärtete Produkt auf der Basis einer diese Mischung enthaltenden trockenen Zusammensetzung oder hydraulisch abbindenden feuchten Formulierung gewonnen wird.

2. Verwendung nach Anspruch 1, **dadurch gekennzeichnet, dass** die thermische Leitfähigkeit $\lambda$ (W.m$^{-1}$.K$^{-1}$) des gehärteten Produkts kleiner 1,0 ist, bevorzugt kleiner oder gleich 0,95 und bevorzugt kleiner oder gleich 0,90 ist.

3. Verwendung nach Anspruch 1 oder 2, **dadurch gekennzeichnet, dass** die Abnahme der thermischen Leitfähigkeit $\lambda$ (W.m$^{-1}$.K$^{-1}$) des gehärteten Produkts im Verhältnis zu einem gehärteten Produkt ohne PSA (b) größer oder gleich 10%, bevorzugt 15% und vorzugsweise 20% ist.

4. Verwendung nach einem der vorhergehenden Ansprüche, **dadurch gekennzeichnet, dass** das hydraulische Bindemittel (a) der Zusammensetzung gewählt ist aus der Gruppe, umfassend:

i. mineralische Bindemittel, welche keine Quelle(n) von Aluminiumionen enthalten, bevorzugt aus Portland-Zementen und/oder Schlackenzementen, Geopolymerzementen, natürlichen Puzzolanen, Flugaschen, supersulfatierten Zementen, Calciumsulfaten (Gips, Hemihydrat und/oder Anhydrit), Kalke (dehydratisierter Kalk, Löschkalk und/oder hydraulischer Kalk), Kalium-, Natrium- und/oder Lithiumsilikat;

ii. mineralische Bindemittel, die eine oder mehrere Aluminiumionenquellen umfassen;

- bevorzugt aus Zementen auf der Basis von Calciumaluminaten (CAC) und/oder auf der Basis von Calciumsulfoaluminaten (CSA) und/oder Bindemittel mit hohem Gehalt an aluminiumreichen Zementphasen;
- und noch stärker bevorzugt aus hydraulischen Bindemitteln, welche umfassen:

• wenigstens eine Phase, die gewählt ist aus $C_3A$, $CA$, $C_{12}A_7$, $C_{11}A_7CaF_2$, $C_4A_3\$$ (Yeelimit), $C_2A_{(1-x)}F_x$ (mit $C \rightarrow CaO$; $A \rightarrow Al_2O_3$; $F \rightarrow Fe_2O_3$ und x zugehörig]0,1];
• hydraulische amorphe Phasen, die ein Molverhältnis C/A zwischen 0,3 und 15 aufweisen;
• wobei die hydraulischen Bindemittel derart sind, dass der kumulierte $Al_2O_3$-Gehalt dieser Phasen bevorzugt zwischen:

◦ 3 und 70 Gesamtgewichtsprozent des hydraulischen Bindemittels;
◦ bevorzugt zwischen 7 und 50 Gewichtsprozent;
◦ und besser zwischen 20 und 30 Gewichtsprozent liegt.

5. Verwendung nach wenigstens einem der vorhergehenden Ansprüche, **dadurch gekennzeichnet, dass** die Konzentration an [PSA] in der Zusammensetzung wie folgt definiert ist, in Trockengewichtsprozent in aufsteigender Ordnung, bevorzugt:

$$0,1 \leq [PSA] \leq 20;$$

$$0,2 \leq [PSA] \leq 15;$$

$$0,3 \leq [PSA] \leq 10;$$

$$0,4 \leq [PSA] \leq 7;$$

$$0,5 \leq [PSA] \leq 6.$$

6. Verwendung nach wenigstens einem der vorhergehenden Ansprüche, **dadurch gekennzeichnet, dass** der PSA (b) gewählt ist aus der Gruppe, welche umfasst oder noch besser besteht aus:

- vernetzten Natriumpolyacrylaten;
- vernetzten Acrylamid- und Natriumacrylat- Copolymeren;
- vernetzten Natriumacrylat- oder Acrylamid-Copolymeren und einer Zusammensetzung, die wenigstens eine Gruppe vom Typ Sulfongruppe und/oder Phosphongruppe umfasst;
- vernetzten Stärke- und hydrolysierten Acrylnitril-Copolymeren;
- vernetzten Maleinsäureanhydrid- und Ethylen-Copolymeren;
- vernetzten Carboxymethylcellulosenn;
- vernetztem Polyethylenoxid;
- und/oder Pfropfpolymerisaten auf der Basis von Polyvinylalkohol mit Phosphorsäure;
- und deren Mischungen.

7. Verwendung nach wenigstens einem der vorhergehenden Ansprüche, **dadurch gekennzeichnet, dass** die Zusammensetzung außer den Bestandteilen (a)-(b) wenigstens einen der folgenden Bestandteile umfasst:

(c) einen Abbindeverzögerer;

(d) einen Abbindebeschleuniger;
(e) einen Wasserrückhalter;
(f) ein Füllmittel;
(g) ein leichtes Füllmittel;
(h) ein Hydrophobierungsmittel;
(i) einen Farbstoff;
(j) Fasern;
(k) einen Entschäumer;
(l) ein redispergierbares Harzpulver;
(m) ein Fließmittel
(n) einen Luftporenbildner oder ein Schäummittel;
(o) ein gaserzeugendes Mittel;
(p) ein flammhemmendes Mittel.

**8.** Verwendung nach wenigstens einem der vorhergehenden Ansprüche, wobei die Zusammensetzung wenigstens eines der folgenden Merkmale aufweist:

• Der Abbindeverzögerer (c) ist bevorzugt aus der Gruppe gewählt, die umfasst oder noch besser besteht aus: Calcium-Chelatbildnern, Carboxylsäuren und deren Salzen, Polysacchariden und deren Derivaten, Phosponaten, Lignosulphonaten, Phosphaten, Boraten, Blei-, Zink-, Kupfer-, Arsen- und Antimonsalzen, und insbesondere aus Weinsäure und deren Salzen, bevorzugt Natrium- oder Kaliumsalzen, Zitronensäure und deren Salzen, bevorzugt ihrem Natriumsalz (Trinatriumcitrat), Natriumgluconate; Natriumphosphonate; Natrium- oder Kaliumsulfaten und deren Salzen, sowie deren Mischungen;

• Der Abbindebeschleuniger (d) ist aus der Gruppe gewählt, die umfasst oder noch besser besteht aus: Alkali- und Erdalkalisalzen von Hydroxiden, Halogeniden, Nitraten, Nitriten, Carbonaten, Thiocyanaten, Sulfaten, Thiosulfaten, Perchloraten, Kieselerde, Aluminium und/oder aus Carboxylsäuren und Hydrocarboxylsäuren und deren Salzen, Alcanolaminen, unlöslichen Silikatverbindungen wie Silikastaub, Flugasche oder natürlichen Puzzolanen, Aluminiumionenquellen, quaternärem silikatischem Ammonium, feinst zerkleinerten mineralischen Verbindungen, wie Kieselgel oder feinst zerkleinerten Calcium- und/oder Magnesiumcarbonaten, und deren Mischungen; wobei der Abbindebeschleuniger bevorzugt aus der Gruppe gewählt ist, die umfasst oder noch besser besteht aus: Natrium- oder Calciumchloriden und deren Salzen; Natrium- oder Lithiumcarbonaten und deren Salzen, Natrium- oder Kaliumsulfaten und deren Salze, Calciumhydroxyden und - formiaten und deren Mischungen;

• Der Wasserrückhalter (e) ist aus der Gruppe gewählt, die umfasst oder noch besser besteht aus: Polysacchariden und bevorzugt Cellulose- oder Stärkeethern und deren Mischungen, und bevorzugt aus der Gruppe, umfassend Methylcellulosen, Hydroxyethylcellulosen, Methylhydroxypropylcellulosen, Methylhydroxyethylcellulosen und deren Mischungen, oder aus modifizierten oder nicht-modifizierten Guarethern und deren Mischungen oder Mischungen dieser verschiedenen Familien;

• Das Füllmittel (f) ist aus der Gruppe gewählt, die umfasst oder noch besser besteht aus: Füllmitteln und/oder Sand, bevorzugt aus Kieselsand, Kalksand, Kalksandsteinsand, Magnesiasand und deren Mischungen; Silizium-, Kalk- und Kalksandstein- sowie Magnesiumfüllmitteln und deren Mischungen und/oder aus Metalloxiden, Aluminiumoxiden und/oder aus Glaskugeln und natürlichen und synthetischen Silicatmineralien, bevorzugt gewählt aus Lehm, Glimmer, Metakaolin, Silikastaub und deren Mischungen;

• Das leichte Füllmittel (g) ist aus der Gruppe gewählt, die umfasst oder noch besser besteht aus: geblähtem Perlit, geblähtem Vermiculit, Silikaaerogelen, geblähtem Polystyren, Cenospheren (Fillite), Aluminiumhohlkugeln, geblähtem Lehm, Bims, Glashohlkugeln oder geblähtem Glasgranulat, Silikatschaum-Körnern, Rhyolith und deren Mischungen;

• Das Hydrophobierungsmittel (h) ist aus der Gruppe gewählt, die umfasst oder noch besser besteht aus: fluorierten, silanisierten, silikonisierten, siloxanisierten Mitteln, Metallsalzen von Fettsäuren und deren Mischungen, bevorzugt aus Natrium-, Kalium- und/oder Magnesiumsalzen von Ölsäuren und/oder Stearinsäuren und deren Mischungen;

• Der Farbstoff (i) ist aus der Gruppe gewählt, die umfasst oder noch besser besteht aus: organischen Pigmenten und/oder Mineralien, und insbesondere aus Eisen-, Titan-, Chrom-, Zinn-, Nickel-, Kobalt-, Zink-, Antimonoxiden; und/oder aus Aluminiumsilikaten des polysulfurierten Natrium, Carbon, Cobalt-, Mangan-, Zinksulfiden; und/oder aus Pigmenten mit hoher Transparenz oder hohem Infrarot-Reflexionsgrad und deren Mischungen;

• Die Fasern (j) sind aus der Gruppe gewählt, die umfasst oder noch besser besteht aus: Mineralfasern, tierischen, pflanzlichen und synthetischen Fasern, insbesondere aus der Gruppe, die umfasst oder noch besser besteht aus: Fasern aus Polyamid, Polyacrylnitril, Polyacrylat, Cellulose, Polypropylen, Polyvinylalkohol, Glas, Metall, Leinen, Polycarbonat, Sisal, Jute, Hanf und Mischungen dieser Fasern;

• Der Entschäumer (k) ist aus der Gruppe gewählt, die umfasst oder noch besser besteht aus: Polyetheralkoholen, Kohlenwasserstoffmolekülen, Silikonmolekülen, hydrophoben Estern, nichtionischen Tensiden, Polyoxiranen, und deren Mischungen;

• Das redispergierbare Harzpulver (l) ist aus der Gruppe gewählt, die umfasst oder noch besser besteht aus: Acryl-Homo- oder Copolymer-Harzen, Vinylacetat-Ethylen-Copolymeren, Styrol/Acryl-Copolymeren, Vinylacetat-Terpolymeren, Maleinsäure-Vinyl- und Dialkylester-Versatat, Vinylacetat- und Vinylversatat-Copolymeren, Styrol- und Butadien-Copolymeren und deren Mischungen;

• Das Fließmittel (m) ist aus der Gruppe gewählt, die umfasst oder noch besser besteht aus: Dickungsmitteln, Verflüssigungsmitteln (mineralisch oder organisch) und deren Mischungen, und bevorzugt aus der Untergruppe, die umfasst oder noch besser besteht aus: Polysacchariden und deren Derivaten, Polyvinylalkoholen, mineralischen Dickungsmitteln, linearen Polyacrylamiden, Polynaphtalinsulfonaten, Polymelaminsulphonaten, Polycarboxylaten und deren Mischungen;

• Der Luftporenbildner (n) ist aus der Gruppe gewählt, die umfasst oder noch besser besteht aus: ionischen oder nichtionischen grenzflächenaktiven Verbindungen, bevorzugt aus Natriumalkylsulfonaten, und insbesondere C14, C16-alpha-Olefin-Natriumsulfonaten und deren Mischungen;

• Das gaserzeugende Mittel in situ (o) ist gewählt aus Zusatzstoffen, die bei Kontakt mit den erfindungsgemäßen Zusammensetzungen Sauerstoff, Wasserstoff, Stickstoff, Kohlenmonoxid, Kohlendioxid, Ammoniak oder Methan erzeugen. Sie können aus den in US 7, 288,147 beschriebenen Zusatzstoffen gewählt sein, und insbesondere aus folgenden Gruppen: Azodicarbonamide, Natriumbicarbonat, organische oder inorganische Peroxide, Toluolsulfonylhydrazid, Benzolsulfonylhydrazid, Toluolsulfonylacetonhydrazon, Toluolsulfonylsemicarbazid, Phenyltetrazol, Natriumborohydrid, Dinitrisopentamethylentetramin;

• Das flammenhemmende Mittel (p) ist aus der Gruppe gewählt, die umfasst oder noch besser besteht aus: flammenhemmenden Mitteln mit chemischer oder physikalischer Wirkung, halogenierten flammenhemmenden Mittel, phosphorhaltigen flammenhemmenden Mitteln, stickstoffhaltigen flammenhemmenden Mitteln, aufschäumenden Systemen, mineralhaltigen flammenhemmenden Mitteln, Metallhydroxiden, Zinkverbindungen, Boraten, Antimonoxiden, Nanoverbundwerkstoffen auf der Basis von Aluminiumsilikaterden, sowie deren Mischungen:

bevorzugt aus der Untergruppe, die umfasst oder noch besser besteht aus:

Tetrachlorbisphenol A (TBBPA), Chlorparaffinen, organischen Phosphaten, rotem Phosphor, Phosphonaten, Phosphinaten, Melamin, seinen Salzen und homologen Substanzen, Aluminium- oder Magnesiumhydroxiden, Zinkhydrostannaten, Zinkborat und deren Mischungen.

**9.** Verwendung nach wenigstens einem der vorhergehenden Ansprüche, **dadurch gekennzeichnet, dass** die Nassformulierung in Gewichtsprozent und in aufsteigender Ordnung bevorzugt einen Wassergehalt größer gleich 20, 25, 30, 40, 45, 50 aufweist.

## Claims

**1.** Use of a mixture comprising a mineral binder (a) and at least one SuperAbsorbent Polymer (SAP) (b), in order to improve the thermal characteristics of a hardened product intended for the construction industry, by reducing its thermal conductivity $\lambda$ (W.m$^{-1}$.K$^{-1}$), this hardened product being obtained from a dry composition or a hydraulically setting wet formulation comprising this mixture.

**2.** Use according to claim 1, **characterized in that** the thermal conductivity $\lambda$ (W.m$^{-1}$.K$^{-1}$) of the hardened product is less than 1.0, preferably less than or equal to 0.95 and preferably less than or equal to 0.90.

**3.** Use according to claim 1 or 2 **characterized in that** the greater reduction in thermal conductivity $\lambda$ (W.m$^{-1}$.K$^{-1}$) of the hardened product, compared with a hardened product without SAP (b), is greater than or equal to 10%, preferably 15% and more preferably 20%.

**4.** Use according to at least one of the previous claims, **characterized in that** the hydraulic binder (a) of the composition is chosen from the group comprising:

(i) mineral binders that do not contain any source(s) of aluminium ions, preferably from Portland cements and/or slag cements, geopolymer cements, natural pozzolanas, fly ash, supersulphated cements, calcium sulphates (gypsum, hemihydrate and/or anhydrite), lime (unslaked, slaked and/or hydraulic), and/or potassium, sodium, and/or lithium silicates;

(ii) mineral binders that contain one or more sources of aluminium ions;

- preferably from the calcium aluminate cements (CAC) and/or calcium sulphoaluminate (CSA) cements and/or binders having a high content of alumina-rich cementitious phases;
- and even more preferably from hydraulic binders comprising:

• at least one phase chosen from $C_3A$, $CA$, $C_{12}A_7$, $C_{11}A_7CaF_2$, $C_4A_3\$$ (ye'elimite), $C_2A_{(1-x)}F_x$ (with C $\rightarrow$ CaO; A $\rightarrow$ Al$_2$O$_3$; F $\rightarrow$ Fe2O3 and x belonging to ]0, 1]);
• amorphous hydraulic phases having a molar ratio C/A comprised between 0.3 and 15,
• these hydraulic binders being such that the cumulative Al$_2$O$_3$ contents of these phases are preferably comprised between:

  ◦ 3 and 70% by weight of the total hydraulic binder;
  ◦ preferably between 7 and 50% by weight;
  ◦ and more preferably between 20 and 30% by weight.

5. Use according to at least one of the previous claims, **characterized in that** the [SAP] concentration in the composition is defined as follows, as a % of dry weight, in increasing order of preference:

$$0.1 \leq [\text{SAP}] \leq 20;$$

$$0.2 \leq [\text{SAP}] \leq 15;$$

$$0.3 \leq [\text{SAP}] \leq 10;$$

$$0.4 \leq [\text{SAP}] \leq 7;$$

$$0.5 \leq [\text{SAP}] \leq 6.$$

6. Use according to at least one of the previous claims, **characterized in that** the SAP (b) is chosen from the group comprising, or even better constituted by:

- crosslinked sodium polyacrylates;
- crosslinked sodium acrylamide and acrylate copolymers;
- crosslinked sodium acrylate or acrylamide copolymers and copolymers of a compound comprising at least one group of the sulphonic and/or phosphonic type;
- hydrolyzed crosslinked starch and acrylonitrile copolymers;
- crosslinked maleic anhydride and ethylene copolymers;
- crosslinked carboxymethylcelluloses;
- crosslinked polyethylene oxide;
- and/or phosphoric acid grafted polyvinyl alcohol-based polymers;
- and mixtures thereof.

7. Use according to at least one of the previous claims, **characterized in that** the composition comprises, in addition to the components (a)-(b), at least one of the following components:

(c) a setting retarder;
(d) a setting accelerator;
(e) a water-retaining agent;
(f) a filler;
(g) a lightweight filler;
(h) a water repellent;

(i) a colouring agent;
(j) fibres;
(k) an anti-foaming agent;
(l) a dispersible powder resin;
(m)a rheological agent;
(n) an air-entraining or foaming agent;
(o) a gas-generating agent;
(p) a fire retardant.

8. Use according to at least one of the previous claims, in which the composition has at least one of the following features:

• the setting retarder (c) is preferably chosen from the group comprising, or even better constituted by, calcium chelating agents, carboxylic acids and salts thereof, polysaccharides and derivatives thereof, phosphonates, lignosulphonates, phosphates, borates, and the salts of lead, zinc, copper, arsenic and antimony, and more particularly from tartaric acid and its salts, preferably its sodium or potassium salts, citric acid and its salts, preferably its sodium salt (trisodium citrate), sodium gluconates; sodium phosphonates; sulphates and their sodium or potassium salts, and mixtures thereof;
• the setting accelerator (d) is chosen from the group comprising, or even better constituted by, the alkali and alkaline earth salts of hydroxides, halides, nitrates, nitrites, carbonates, thiocyanates, sulphates, thiosulphates, perchlorates, silica, aluminium, and/or from the carboxylic and hydrocarboxylic acids and salts thereof, alkanolamines, insoluble silicate compounds such as fumed silicas, fly ash, or natural pozzolanas, aluminium ion sources, quaternary ammonium silicates, finely divided mineral compounds such as silica gels or finely divided calcium and/or magnesium carbonates and mixtures thereof; this setting accelerator being preferably chosen from the group comprising, or even better constituted by, chlorides and their sodium or calcium salts; carbonates and their sodium or lithium salts, sulphates and their sodium or potassium salts, calcium hydroxides and formates and mixtures thereof;
• the water-retaining agent (e) is chosen from the group comprising, or even better constituted by, the polysaccharides and preferably the cellulose or starch ethers and mixtures thereof, and preferably from the group comprising methylcelluloses, hydroxyethylcelluloses, methylhydroxypropylcelluloses, methylhydroxyethylcelluloses and mixtures thereof, or from the guar ethers, modified or not, and mixtures thereof or the mixture of these different families;
• the filler (f) is chosen from the group comprising, or even better constituted by: fillers and/or sands, preferably from the siliceous, calcareous, silicocalcareous, magnesium sands and mixtures thereof, the siliceous, calcareous, silicocalcareous, magnesium fillers and mixtures thereof, and/or from the metallic oxides, aluminas, and/or from glass beads and the natural and synthetic mineral silicates, preferably chosen from clays, micas, metakaolins, fumed silicas, and mixtures thereof;
• the lightweight filler (g) is chosen from the group comprising, or even better constituted by: expanded perlite, expanded vermiculite, silica aerogels, expanded polystyrene, cenospheres (fillites), alumina hollow balls, expanded clays, pumice, glass hollow balls or expanded glass granules, silicate foam grains, rhyolite, and mixtures thereof;
• the water repellent (h) is chosen from the group comprising, or even better constituted by, fluorinated, silanized, siliconate, siloxanated agents, fatty acid metal salts and mixtures thereof, preferably from the sodium, potassium and/or magnesium salts of oleic and/or stearic acids and mixtures thereof;
• the colouring agent (i) is chosen from the group comprising, or even better constituted by, the organic and/or mineral pigments, and more particularly from the oxides of iron, titanium, chromium, tin, nickel, cobalt, zinc, antimony, and/or from polysulphurated sodium aluminosilicates, carbon, the sulphides of cobalt, manganese, zinc, and/or from the high-transparency or highly infrared-reflective pigments and mixtures thereof;
• the fibres (j) are chosen from the group comprising, or even better constituted by, mineral, animal, plant and synthetic fibres, more particularly from the group comprising, or even better constituted by, polyamide, polyacrylonitrile, polyacrylate, cellulose, polypropylene, polyvinyl alcohol, glass, metal, flax, polycarbonate, sisal, jute, hemp fibres and mixtures of these fibres;
• the anti-foaming agent (k) is chosen from the group comprising, or even better constituted by, polyether polyols, hydrocarbonated molecules, siliconate molecules, hydrophobic esters, non-ionic surfactants, polyoxiranes and mixtures thereof;
• the dispersible powder resin (l) is chosen from the group comprising, or even better constituted by, the families of the acrylic homo- or copolymer resins, vinyl acetate-ethylene copolymers, styrene-acrylic copolymers, vinyl acetate, vinyl versatate and maleic acid dialkyl ester terpolymers, vinyl acetate and vinyl versatate copolymers, styrene and butadiene copolymers and mixtures thereof;

• the rheological agent (m) is chosen from the group comprising, or even better constituted by, thickeners, plasticizers (mineral and/or organic) and mixtures thereof, and more preferably from the sub-group comprising, or even better constituted by, polysaccharides and derivatives thereof, polyvinyl alcohols, mineral thickeners, linear polyacrylamides, polynaphthalene sulphonates, polymelamine sulphonates, polycarboxylates and mixtures thereof;

• the air-entraining agent (n) is chosen from the group comprising, or even better constituted by, ionic or non-ionic surfactants, preferably from sodium alkylsulphonates, and more particularly C14 and C16 sodium alpha-olefin sulphonates and mixtures thereof;

• the agent (o) that generates gas *in situ* is chosen from the admixtures that, on contact with the compositions according to the invention, generate oxygen, hydrogen, nitrogen, carbon monoxide or dioxide, ammonia, methane. They can be chosen from the admixtures described in US 7,288,147 and in particular from the families of azodicarbonamide, sodium bicarbonate, organic or inorganic peroxides, toluenesulphonyl hydrazide, benzenesulphonyl hydrazide, toluenesulphonyl acetone hydrazone, toluenesulphonyl semicarbazide, phenyltetrazole, sodium borohydride, dinitroso pentamethylenetetramine;

• the fire retardant (p) is chosen from the group comprising, or even better constituted by, flame-retarding agents having chemical and/or physical action, halogenated flame-retarding agents, phosphorated flame-retarding agents, nitrogenated flame-retarding agents, intumescent systems, mineral flame-retarding agents, metal hydroxides, zinc compounds, borates, antimony oxides, nanocomposites based on aluminium silicate-based clays and mixtures thereof:

preferably from the sub-group comprising, or even better constituted by, Tetrachlorobisphenol A (TBBPA), chloroparaffins, organic phosphates, red phosphorus, phosphonates, phosphinates, melamine, its salts and homologues, aluminium or magnesium hydroxides, zinc hydroxystannates, zinc borate and mixtures thereof.

9. Use according to at least one of the previous claims, **characterized in that** the wet formulation has a mix ratio greater than or equal to, as a % by weight and in increasing order of preference, 20; 25; 30; 40; 45; 50.

## FIG. 1

λ = f (% SAPS)

% SAPS

## FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7288147 B
- FR 2955103 A
- FR 2955104 A
- US 2003144386 A
- US 2010190888 A
- WO 2004101952 A1